# EUROPÄISCHE PATENTSCHRIFT

(11) **EP 3 213 968 B1**
(45) Veröffentlichungstag und Bekanntmachung des Hinweises auf die Patenterteilung: **28.10.2020**
(21) Anmeldenummer: 17158754.6
(22) Anmeldetag: 01.03.2017
(51) Int. Cl.: B60R 25/0215

(54) **VERRIEGELUNGSVORRICHTUNG**
LOCKING DEVICE
DISPOSITIF DE VERROUILLAGE

(30) Priorität: 03.03.2016 DE 102016103873
(43) Veröffentlichungstag der Anmeldung: 06.09.2017
(73) Patentinhaber: Huf Hülsbeck & Fürst GmbH & Co. KG, 42551 Velbert (DE)
(72) Erfinder: Zillmann, Horst, 81243 München (DE)
(74) Vertreter: Bals, Rüdiger

(56) Entgegenhaltungen:
- EP-A2- 1 302 375
- DE-C1- 19 809 295
- US-A1- 2002 088 257

## Beschreibung

Die vorliegende Erfindung ist auf eine Verriegelungsvorrichtung gemäß dem Oberbegriff des Anspruchs 1 zum Verriegeln und/oder Entriegeln eines funktionswesentlichen Bauteils bei einem Fahrzeug, wie z. B. einer Lenksäule oder eines Gangschalthebels oder dergleichen, gerichtet. Weiter ist die Erfindung auf ein Verfahren zum Verriegeln und/oder Entriegeln eines funktionswesentlichen Bauteils eines Fahrzeugs durch eine Verriegelungsvorrichtung gerichtet.

Aus dem Stand der Technik sind gattungsgemäße Verriegelungsvorrichtungen bei Kraftfahrzeugen bekannt, welche zur Verriegelung von bspw. einer Lenksäule eingesetzt werden. So zeigt bspw. die Druckschrift DE 10 2004 031 238 A1 in Fig. 1 eine gattungsgemäße Vorrichtung, welche in einer sogenannten 12-Uhr-Stellung oberhalb der Lenksäule in einem Fahrzeug angeordnet wird, um durch diese besondere Anordnung einen Diebstahl des Fahrzeuges und/oder Manipulationen möglichst zu erschweren. Diese Vorrichtung weist zudem ein Sperrelement zur Verriegelung des funktionswesentlichen Bauteils des Fahrzeuges auf. In der Verriegelungsposition wird dabei das Sperrelement (z. B. ein Sperrbolzen) in Wirkverbindung mit dem funktionswesentlichen Bauteil gebracht, z. B. dadurch, dass der Sperrbolzen formschlüssig in eine Aufnahme des Bauteils eingebracht wird. Hierzu weist die Lenksäule bspw. einen Zahnradkranz auf, wobei die Aufnahme zwischen den Zahnsegmenten (Zähnen) gebildet ist.

In Abhängigkeit von der Stellung des funktionswesentlichen Bauteils und der Aufnahme des Bauteils kann es dabei z. B. in bestimmten Stellungen vorkommen, dass das Sperrelement nicht ordnungsgemäß in die Aufnahme eingreift, sondern auf benachbarte Teile der Aufnahme (wie den Zahn) trifft. In dieser Zwischenposition erfolgt zunächst keine wirksame Verriegelung, sondern es wird bspw. erst durch eine Bewegung des funktionswesentlichen Bauteils der Positionswechsel in die Verriegelungsposition fortgeführt.

Um dennoch eine Beschädigung der Verriegelungsvorrichtung zu vermeiden, ist oft ein Spiel für die Bewegung des Sperrelements, z. B. zwischen dem Sperrelement und einem Antrieb oder einem Steuerelement, vorgesehen. So kann trotz der Ansteuerung in die Verriegelungsposition der vollständige Positionswechsel des Sperrelements im Blockierfall verhindert werden (sog. "Zahn auf Zahn" Stellung). Es wird bspw. durch dieses Spiel erreicht, dass das Sperrelement nicht zwangsweise von dem Steuerelement geführt wird.

Dies führt allerdings dazu, dass die Position des Sperrelements in bestimmten Situationen nicht eindeutig erfasst werden kann. Es hat daher als Nachteil herausgestellt, dass (z. B. in solchen oder ähnlichen Situationen) nur eine unzureichende Erfassung der Position des Sperrelements möglich ist. Es kann bspw. das Problem auftreten, dass die Position des Sperrelements fälschlicherweise als Entriegelungsposition erfasst wird, wobei die tatsächliche Position z. B. die Verriegelungsposition oder eine Zwischenposition ist. Dies führt dazu, dass bei einem Betrieb des Fahrzeuges und einer Bewegung des funktionswesentlichen Bauteils ein sicherheitskritischer Zustand auftritt. Weiter sind auch die Zwischenposition und/oder die Verriegelungsposition des Sperrelements oft nur unzureichend erfassbar.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine zuverlässigere Positionserfassung eines Sperrelements einer Verriegelungsvorrichtung zu ermöglichen. Weiter soll insbesondere ein zuverlässiger und sichererer Betrieb einer Verriegelungsvorrichtung zum Verriegeln und/oder Entriegeln eines funktionswesentlichen Bauteils eines Fahrzeugs ermöglicht werden.

Die Aufgabe wird insbesondere gelöst durch eine Verriegelungsvorrichtung mit den Merkmalen des Anspruchs 1 sowie durch ein Verfahren mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit den erfindungsgemäßen Verriegelungsvorrichtungen, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Verriegelungsvorrichtung zum Verriegeln und/oder Entriegeln eines funktionswesentlichen Bauteils eines Fahrzeugs, wobei das funktionswesentliche Bauteil bspw. als eine Lenksäule oder ein Bremspedal oder ein Gangschalthebel oder dergleichen ausgeführt ist. Das Fahrzeug ist z. B. als Kraftfahrzeug und/oder als Personenkraftfahrzeug und/oder als Lastkraftfahrzeug und/oder als Hybridfahrzeug und/oder als Elektrofahrzeug ausgeführt. Die Verriegelungsvorrichtung umfasst vorzugsweise ein bewegbares Sperrelement, welches durch ein Steuerelement zumindest zwei (z. B. stabile und/oder End-) Positionen einnehmen kann, nämlich zumindest eine Verriegelungsposition, in der das Sperrelement zur Sperrung (Verriegelung) des funktionswesentlichen Bauteils aus einem Gehäuse der Verriegelungsvorrichtung durch eine Öffnung herausragt und/oder in einer Wirkverbindung mit dem funktionswesentlichen Bauteil steht, und eine Entriegelungsposition, in der das Sperrelement zur Entriegelung des funktionswesentlichen Bauteils (z. B. vollständig oder weitestgehend) im Gehäuse angeordnet ist und/oder in keiner Wirkverbindung mit dem funktionswesentlichen Bauteil steht. Mit anderen Worten steuert das Steuerelement einen Positionswechsel des Sperrelements in die zumindest zwei Positionen, wobei die Positionen bspw. stabile Positionen und/oder Endpositionen sind. Somit kann insbesondere das Sperrelement durch den Positionswechsel und/oder, vorzugsweise nur, bei einer vollständigen Freigabe von der Entriegelungsposition, insbesondere über mindestens eine Zwischenposition, in die Verriegelungsposition oder umgekehrt überführbar sein. Bevorzugt wird die vollständige Freigabe dabei durch das Steuerelement erteilt, z. B. durch eine Bewegung in die zweite Steuerlage, in welcher ein Spiel eines Steuermittels die Freigabe bewirkt. Dabei ist bevorzugt das Steuerelement derart mit dem Sperrelement mechanisch verbunden und/oder wirkt derart mit dem Sperrelement mechanisch zusammen, dass durch das Steuerelement das Sperrelement freigebbar und/oder der Positionswechsel durchführbar ist. Besonders bevorzugt ist ein (z. B. elektrisches und/oder elektronisches und/oder elektrooptisches) Detektionselement zur Erfassung der Position des Sperrelements vorgesehen. Hierbei ist insbesondere vorgesehen, dass durch das Detektionselement direkt (in direkter Weise) die Position, d. h. zumindest eine der Positionen, insbesondere die Entriegelungsposition und/oder die Verriegelungsposition und/oder die Zwischenposition, des Sperrelements erfassbar ist. Dies hat den Vorteil, dass die Position des Sperrelements zuverlässig und eindeutig bestimmt werden kann, so dass eine erhöhte Sicherheit beim Betrieb der Verriegelungsvorrichtung gewährleistet wird.

Unter der direkten Erfassung der Position des Sperrelements wird dabei insbesondere verstanden, dass zumindest eine der Positionen (z. B. die Entriegelungsposition) als tatsächliche Position (Ist-Position) des Sperrelements (und/oder zumindest eine der Steuerlagen des Steuerelements als tatsächliche Steuerlage), insbesondere ohne Zwischenstufen und/oder spielfrei, erfasst wird. Eine solche Zwischenstufe ist bspw. ein Sicherheitsmechanismus, wie ein Federelement, welcher ein Spiel für die Bewegung des Sperrelements bereitstellt. Dieses Spiel ist dabei z. B. ein Bewegungsfreiraum für das Sperrelement, um zu erreichen, dass das Sperrelement nicht zwangsweise von dem Steuerelement geführt wird, um mechanische Zerstörungen z. B. bei der "Zahn auf Zahn" Stellung an der Verriegelungsvorrichtung zu vermeiden. Bspw. kann das Sperrelement nicht (vollständig) aus dem Gehäuse herausragen und/oder in Wirkverbindung mit dem funktionswesentlichen Bauteil zur Verriegelung gebracht werden, wenn ein Zahn des funktionswesentlichen Bauteils den erforderlichen Platz für die Bewegung in die Verriegelungsposition und/oder in eine dafür vorgesehene Aufnahme des funktionswesentlichen Bauteils versperrt. Wenn nun die Position des Sperrelements nur in indirekter Weise z. B. durch die (direkte) Ermittlung der Steuerlage des Steuerelements erfasst wird, kann dies aufgrund des Spiels dazu führen, dass nicht die tatsächliche Position des Sperrelements (eindeutig) bestimmt werden kann. So befindet sich das Sperrelement tatsächlich z. B. in einer Zwischenposition, in welcher die vollständige Bewegung in die Verriegelungsposition durch z. B. einen Zahn des funktionswesentlichen Bauteils verhindert ist. Es sind selbstverständlich auch andere Fehlereinflüsse denkbar, welche dazu führen, dass die Position des Sperrelements (z. B. die Entriegelungsposition) nicht eindeutig erfasst werden kann, und somit eine Unsicherheit besteht, welche Position das Sperrelement tatsächlich eingenommen hat.

Bevorzugt ist im Gegensatz zu der indirekten Erfassung der Position, z. B. der Entriegelungsposition, des Sperrelements bei der direkten Erfassung der Position, z. B. der Entriegelungsposition, des Sperrelements eine eindeutige Bestimmung zumindest einer der Positionen möglich. Mit anderen Worten hat die Entriegelungsposition einen direkten (und spielfreien) Einfluss auf das Detektionselement, z. B. durch die direkte Beeinflussung und/oder Unterbrechung eines Lichtstrahls durch das Sperrelement. Um eine direkte Erfassung zu erzielen, kann bspw. stets ein definierter Abstand zwischen dem Detektionselement und dem Sperrelement und/oder einem Wirkteil des Sperrelements in der Entriegelungsposition oder Verriegelungsposition vorgesehen sein. Bevorzugt ist daher durch das Detektionselement nicht die Soll-Position anhand des Steuerelements, sondern die Ist-Position des Sperrelements direkt erfassbar. Insbesondere erfolgt die Erfassung der Position durch das Detektionselement derart, dass das Spiel keinen Einfluss auf die Erfassung hat, und somit insbesondere die Zwischenstufe für das Spiel außerhalb des Erfassungseinflusses liegt. Es ist dabei denkbar, dass das Spiel z. B. auch innerhalb des Sperrelements (Bolzens) vorgesehen sein kann, z. B. durch eine Feder zwischen dem Wirkteil und einem Basisteil des Sperrelements. Entsprechend erfolgt dann die direkte Erfassung z. B. nur anhand des Wirkteils. Alternativ oder zusätzlich kann es vorgesehen sein, dass das Spiel außerhalb des Sperrelements, z. B. zwischen dem Sperrelement und dem Steuerelement, vorgesehen ist. Somit wir der Vorteil erzielt, dass Beschädigungen bei einem Auftreffen des Sperrelements auf einen Zahn des funktionswesentlichen Bauteils vermieden werden können und dennoch die Position auch in diesem Fall z. B. für die Entriegelungsposition eindeutig erfasst werden kann.

Weiterhin ist es denkbar, dass das Steuerelement in eine erste Steuerlage und in eine zweite Steuerlage bringbar ist, und vorzugsweise das Steuerelement derart mit dem Sperrelement zusammenwirkt, dass in der ersten Steuerlage durch das Sperrelement nur (ausschließlich) die Entriegelungsposition einnehmbar ist, wobei bevorzugt in der zweiten Steuerlage das Sperrelement für den Positionswechsel freigegeben ist. Der Ausdruck "freigebbar" bedeutet in diesem Zusammenhang insbesondere, dass ein Positionswechsel möglich ist, jedoch aufgrund des Spiels nicht zwangsläufig erfolgen muss. Insbesondere kann ein Krafteinfluss auf das Sperrelement dazu führen, dass das Sperrelement weiterhin in der Entriegelungsposition und/oder in der Zwischenposition verharrt, und somit nicht den Positionswechsel vollständig durchführt. Entsprechend ist insbesondere vorgesehen, dass bei einem Wechsel des Steuerelements in die erste Steuerlage das Sperrelement zwangsweise nur die Entriegelungsposition einnehmen kann (d. h. es ist hierfür kein Bewegungsspielraum vorgesehen). Dagegen ist bei einem Wechsel des Steuerelements in die zweite Steuerlage ein Spiel für das Sperrelement vorgesehen, so dass es den Positionswechsel vollständig durchführen kann, aber in Aufnahmefällen (z. B. wenn wie zuvor beschrieben ein Zahn des funktionswesentlichen Bauteils den Platz für das Sperrelement versperrt) nicht einnehmen muss. Mit anderen Worten wird das Sperrelement in die Entriegelungsposition zwangsweise und in die Verriegelungsposition nicht zwangsweise von dem Steuerelement geführt. Alternativ oder zusätzlich kann es auch vorgesehen sein, dass auch in der Entriegelungsposition ein Fehlereinfluss bzw. Ungenauigkeitseinfluss für die Erfassung (wie ein Spiel) auftreten kann, sodass durch eine indirekte Erfassung der Position des Sperrelements in der ersten Steuerlage des Steuerelements auch die Entriegelungsposition nicht eindeutig bestimmt werden kann. Somit lassen sich durch die direkte Erfassung zuverlässig Beschädigungen an der Verriegelungsvorrichtung vermeiden, wenn der Platz für eine Bewegung des Sperrelements in eine Aufnahme des funktionswesentlichen Bauteils versperrt ist.

Es ist ferner denkbar, dass das Steuerelement ein Steuermittel, insbesondere in Form einer Führung und/oder einer spiralförmigen Führungsnut und/oder einer Führungskontur, aufweist, wobei das Sperrelement ein Gegensteuermittel umfasst, wobei vorzugsweise das Steuermittel mit dem Gegensteuermittel formschlüssig zusammenwirkt, um einen Positionswechsel zu bewirken. Somit weist zweckmäßigerweise das Steuerelement zum Sperrelement direkt oder indirekt einen Formschluss auf, wodurch die Betätigung (Positionswechsel) des Sperrelements bewirkt wird. Dieser Formschluss kann bspw. aus einem Nocken und/oder einer Führungsnut gebildet sein. Um ein Spiel für die Bewegung des Sperrelements vorzusehen, ist z. B. das Sperrelement direkt oder indirekt in der Führung (z. B. der Führungskontur) formschlüssig geführt, wobei bspw. eine Breite der Führungsfläche der Führung bei einem (Lage-) Wechsel von der ersten Steuerlage in die zweite Steuerlage zunehmend ist. Das durch den Formschluss bedingte Spiel kann somit bspw. zunehmend zwischen der ersten und zweiten Steuerlage sein. Dies ermöglicht einen sicheren und zuverlässigen Betrieb der Verriegelungsvorrichtung.

Des Weiteren kann es vorgesehen sein, dass das Detektionselement ein erstes Detektionselement ist, und ein zweites Detektionselement vorgesehen ist, welches derart relativ und/oder (unmittelbar) angrenzend zum Steuerelement angeordnet ist, dass die (Steuer-) Lage (bzw. Position) des Steuerelements unabhängig von der Position des Sperrelements detektierbar ist. Insbesondere ist das zweite Detektionselement am Steuerelement befestigt und/oder drehfest angeordnet. Selbstverständlich können sich im Rahmen der Erfindung Merkmale, welche im Zusammenhang mit dem (ersten) Detektionselement beschrieben sind, auch auf das zweite oder weitere Detektionselemente beziehen, oder jeweils umgekehrt. Es können bspw. auch sämtliche (erste, zweite und weitere) Detektionselemente baugleich (z. B. als baugleiche Lichtschranke) oder unterschiedlich (z. B. einerseits als Lichtschranke und andererseits als Hall-Sensor) ausgebildet sein. Bevorzugt kann dabei das erste Detektionselement in Wirkverbindung mit dem Sperrelement und das zweite Detektionselement in Wirkverbindung mit dem Steuerelement stehen. Alternativ oder zusätzlich ist es denkbar, dass das Detektionselement, insbesondere das erste Detektionselement, und/oder das zweite Detektionselement, als elektrooptischer Sensor, vorzugsweise als Lichtschranke, ausgebildet ist. Somit umfasst das erste und/oder zweite Detektionselement bspw. eine Lichtquelle (Lichtsender), wie eine Leuchtdiode, und/oder einen Lichtsensor (Lichtempfänger), wie einen Fotodetektor. Besonders bevorzugt ist dabei das Detektionselement, insbesondere das erste Detektionselement, und/oder das zweite Detektionselement, derart ausgeführt, dass eine Unterbrechung und/oder Reflexion und/oder Veränderung eines Lichtstrahles erfasst und als elektrisches Signal angezeigt werden kann. Die Veränderung (z. B. Unterbrechung) des Lichtstrahls, welcher bspw. durch die Leuchtdiode ausgegeben wird, erfolgt dabei bspw. im Falle des ersten Detektionselements direkt oder indirekt durch das Sperrelement und im Falle des zweiten Detektionselements direkt oder indirekt durch das Steuerelement, vorzugsweise in Abhängigkeit von der Position des Sperrelements bzw. Steuerlage des Steuerelements. Dies ermöglicht eine zuverlässige und ggf. auch redundante Erfassung der Position des Sperrelements. Die Erfassung der Steuerlage des Steuerelements durch das zweite Detektionselement kann dabei zur indirekten Erfassung der Position (d. h. zumindest einer Position, z. B. Entriegelungsposition) des Sperrelements dienen, um in redundanter Weise die Erfassung des ersten Detektionselements zu bestätigen.

Ferner kann es vorgesehen sein, dass das Detektionselement, insbesondere das erste Detektionselement und/oder das zweite Detektionselement, an einer (elektrischen und/oder elektronischen) Leiterplatte (insbesondere elektrisch leitend) angeordnet sind, vorzugsweise ortsfest auf einer Seite der Leiterplatte, welche dem Sperrelement und/oder dem Steuerelement zugewandt ist. Alternativ oder zusätzlich ist das (erste) Detektionselement derart ausgeführt, dass bei einer Bewegung des Sperrelements ein sich definiert verändernder Abstand des Detektionselements zum Sperrelement auftritt. Die Leiterplatte ist insbesondere fest am Gehäuse der Verriegelungsvorrichtung befestigt. Weiter kann es vorgesehen sein, dass das Detektionselement derart ausgeführt ist, dass ausschließlich in der Verriegelungsposition (oder alternativ in der Entriegelungsposition) eine Einwirkung auf das Detektionselement (z. B. Unterbrechung eines Lichtstrahls) erfolgt. Die Anordnung an der Leiterplatte ermöglicht dabei, dass das bei Erfassung zur Detektion ausgegebene elektrische Signal des Detektionselements zuverlässig ausgewertet und/oder weiter verarbeitet werden kann. Hierzu ist bspw. eine Elektronik der Verriegelungsvorrichtung vorgesehen und/oder elektronisch an bzw. mit der Leiterplatte verbunden. Auch kann es bevorzugt vorgesehen sein, dass eine (zentrale) Fahrzeugelektronik elektrisch mit der Leiterplatte und/oder dem Detektionselement verbunden ist. Die Übertragung des elektrischen Signals des Detektionselements kann ferner auch bspw. über Funk, z. B. an die zentrale Fahrzeugelektronik, erfolgen. Die ortsfeste Anordnung an der Leiterplatte, derart, dass die Position des Sperrelements durch das (erste) Detektionselement detektiert werden kann, ermöglicht eine zuverlässige Erfassung zumindest einer der Positionen und gleichzeitig eine Reduzierung des erforderlichen Bauraums.

Außerdem kann es im Rahmen der Erfindung vorgesehen sein, dass das Detektionselement, insbesondere das erste Detektionselement, und/oder das zweite Detektionselement, zumindest eine Lichtquelle, insbesondere eine Leuchtdiode, und zumindest einen Lichtempfänger, insbesondere eine Fotodiode und/oder einen Fototransistor und/oder einen Fotowiderstand, vorzugsweise mit einem optischen Filter aufweisen. Der optische Filter kann dabei bspw. als Infrarotfilter ausgeführt sein, um höherfrequentes Licht abzuschirmen und die Sensitivität des Detektionselements zu erhöhen. Insbesondere kann es möglich sein, dass die Lichtquelle Licht mit einer Wellenlänge im Infrarotbereich und/oder von im Wesentlichen 660 nm oder bspw. im Bereich von im Wesentlichen 600 nm bis 1200 nm, vorzugsweise 880 nm bis 940 nm emittiert. Weitere Vorteile ergeben sich z. B. durch den Einsatz von weiteren optischen Filtern, wie bspw. einem Polarisationsfilter, um die Ausbildung des Detektionselements mit einem Retroreflektor zu ermöglichen. Das (erste) Detektionselement und/oder das zweite Detektionselement kann dabei als Einweglichtschranke oder als Reflex-Lichtschranke oder als Reflex-Lichttaster oder als Lichtgitter oder als faseroptische Lichtschranke ausgeführt sein. Zudem kann es vorgesehen sein, dass das erste Detektionselement und das zweite Detektionselement weitere optische Elemente, wie z. B. eine Linse aufweisen. Auch ist es denkbar, dass das (erste) Detektionselement und/oder das zweite Detektionselement linsenfrei und/oder filterfrei ausgeführt sind, um den Kostenaufwand und die Komplexität der Verriegelungsvorrichtung zu reduzieren.

Vorteilhaft ist es darüber hinaus, wenn im Rahmen der Erfindung vorgesehen ist, dass das Detektionselement, insbesondere das erste Detektionselement, und/oder das zweite Detektionselement einen Detektionsraum aufweist, wobei das Steuerelement und/oder das Sperrelement jeweils ein dazu komplementäres Detektionsmittel aufweisen, wobei vorzugsweise bei einem Einbringen des Detektionsmittels in den Detektionsraum eine Detektion (zur Erfassung zumindest einer der Positionen des Sperrelements) erfolgt. Das Detektionsmittel umfasst dabei bspw. ein lichtabsorbierendes oder lichtreflektierendes Material, welches dazu ausgeführt ist, Licht mit der Wellenlänge des von einer Lichtquelle des ersten und/oder zweiten Detektionselements emittierten Lichts zu absorbieren bzw. zu reflektieren. Hierzu kann das erste und/oder zweite Detektionselement bspw. eine U-förmige Gehäuseanordnung zur beabstandet gegenüberliegenden Anordnung der Lichtquelle und des Lichtempfängers aufweisen. Alternativ kann auch eine einseitige Anordnung der Lichtquelle und des Lichtempfängers am Detektionselement vorgesehen sein. Die Lichtquelle und der Lichtempfänger können somit bspw. auf gegenüberliegenden Seiten des Detektionselements angeordnet sein, so dass bei einer Einbringung des Detektionsmittels in den Zwischenraum zwischen den Lichtempfänger und der Lichtquelle eine Unterbrechung des von der Lichtquelle emittierten Lichtstrahls erfolgt und durch den Lichtempfänger detektiert wird. Alternativ oder zusätzlich wird bei einer einseitigen Anordnung der Lichtquelle und des Lichtempfängers bspw. eine Reflektion des emittierten Lichtstrahls am Detektionsmittel erfasst. Dies ermöglicht eine flexible und platzsparende Anordnung des ersten oder zweiten Detektionselements zur Erfassung der Position bzw. Steuerlage.

Des Weiteren ist es denkbar, dass das Detektionselement, insbesondere das erste Detektionselement und/oder das zweite Detektionselement, stationär und/oder unbeweglich in der Verriegelungsvorrichtung, insbesondere fest zu einem Gehäuse der Verriegelungsvorrichtung, angeordnet ist, insbesondere derart, dass eine Relativbewegung zwischen dem ersten und/oder zweiten Detektionselement und/oder Sperrelement und/oder dem Steuerelement möglich ist. Unter einer Anordnung fest zu dem Gehäuse der Verriegelungsvorrichtung wird in diesem Zusammenhang verstanden, dass das Detektionselement bzw. das erste und/oder zweite Detektionselement direkt am Gehäuse oder auch nur indirekt am Gehäuse angeordnet und/oder fest verbunden ist. Somit kann zuverlässig die tatsächliche Position bzw. Steuerlage detektiert werden.

Weiter kann es vorgesehen sein, dass durch einen Lagewechsel des Steuerelements von einer ersten Steuerlage in eine zweite Steuerlage ein Positionswechsel des Sperrelements von der Entriegelungsposition in die Verriegelungsposition im Normalfall durchgeführt wird, wobei in einem Blockierfall ein vollständiger Positionswechsel des Sperrelements verhindert ist. Der Blockierfall tritt bspw. dann auf, wenn das Sperrelement nicht in eine Aufnahme des funktionswesentlichen Bauteils eingeführt werden kann, da bspw. ein Zahn des funktionswesentlichen Bauteils die Bewegung in die Aufnahme behindert. Aufgrund eines Spiels für die Bewegung des Sperrelements kann im Blockierfall der vollständige Positionswechsel verhindert sein, da der Positionswechsel von der Entriegelungsposition in die Verriegelungsposition nicht zwangsweise durch das Steuerelement geführt wird (z. B. im Gegensatz zum Positionswechsel in umgekehrter Richtung von der Verriegelungsposition in die Entriegelungsposition, welches zwangsweise durch das Steuerelement geführt sein kann). Somit können zuverlässig Beschädigungen an der Verriegelungsvorrichtung verhindert werden.

Es ist ferner denkbar, dass das Sperrelement derart ausgebildet ist, dass es im Normalfall durch den Positionswechsel in die Aufnahme des funktionswesentlichen Bauteils eingebracht wird und vorzugsweise das funktionswesentliche Bauteil hierdurch formschlüssig verriegelt, wobei insbesondere im Blockierfall das Bauteil, insbesondere die Zähne des Bauteils, einen Positionswechsel blockieren. Alternativ oder zusätzlich ist es denkbar, dass bei einem unvollständigen Positionswechsel in einem Blockierfall das Sperrelement in der Entriegelungsposition und/oder einer Zwischenposition verbleibt, wobei insbesondere von dem ersten und/oder zweiten Detektionselement die Entriegelungsposition und/oder die Zwischenposition von der Verriegelungsposition und/oder Zwischenposition unterscheidbar ist. Mit anderen Worten wechselt das Sperrelement im Blockierfall nicht wie im Normalfall von der Entriegelungsposition in die Verriegelungsposition, sondern von der Entriegelungsposition in eine Zwischenposition (oder verbleibt alternativ in der Entriegelungsposition). Die Entriegelungsposition und/oder die Zwischenposition und/oder die Verriegelungsposition kann dabei z. B. direkt oder indirekt durch das erste bzw. zweite Detektionselement detektiert werden, um die Sicherheit beim Betrieb des Fahrzeugs zu erhöhen.

Gemäß einem weiteren Vorteil kann es vorgesehen sein, dass das Steuerelement drehbar in der Verriegelungsvorrichtung gelagert ist, wobei ein Wechsel von einer ersten Steuerlage in eine zweite Steuerlage durch eine Rotation des Steuerelements durchführbar ist, wobei vorzugsweise die Rotationsachse dieser Rotation des Steuerelements parallel zur Bewegungsrichtung des Sperrelements (z. B. in Richtung zum funktionswesentlichen Bauteil) ist. Dies ermöglicht einen einfachen und platzsparenden Aufbau der Verriegelungsvorrichtung.

Außerdem kann es möglich sein, dass das Steuerelement in mechanischer Wirkverbindung mit einer Antriebseinheit steht, vorzugsweise über ein selbsthemmendes Getriebe, z. B. ein Schneckengetriebe, und die Bewegung der Antriebseinheit an das Sperrelement direkt oder indirekt über ein Steuermittel des Steuerelements übertragen wird, um einen Positionswechsel durchzuführen. Es kann insbesondere eine außenseitige Führung des Sperrelements oder eine innenseitige Führung des Sperrelements vorgesehen sein. Hierzu ist das Steuermittel bspw. an einer Außen- bzw. Innenseite des Steuerelements angeordnet. Die Außen- und/oder Innenseite des Steuerelements können bspw. mindestens ein Detektionsmittel, wie eine Wand, aufweisen, um in Zusammenwirkung mit einem zweiten Detektionselement eine Erfassung der Steuerlage (und damit indirekt der Position des Sperrelements) zu bewirken. Die Antriebseinheit wird bspw. durch eine Elektronik des Fahrzeugs angesteuert. Alternativ oder zusätzlich kann ein weiteres Detektionselement (oder zweites Detektionselement) an der Antriebseinheit und/oder am Getriebe vorgesehen sein, um z. B. anhand der Drehbewegung der Antriebseinheit indirekt die Position des Sperrelements zu erfassen. Die Bewegung des Steuerelements und damit auch des Sperrelements durch die Antriebseinheit von der Entriegelungsposition in die Verriegelungsposition bzw. von der ersten in die zweite Steuerlage ermöglicht es dabei, Manipulationen am Fahrzeug und einen Diebstahl des Fahrzeugs zu erschweren.

Vorteilhaft ist es darüber hinaus, wenn im Rahmen der Erfindung das Steuermittel zwischen der ersten Steuerlage und der zweiten Steuerlage ein derartig zunehmendes Spiel, insbesondere Führungsspiel, aufweist, dass der Positionswechsel zunehmend und/oder graduell durchführbar ist. Alternativ oder zusätzlich kann das Steuermittel als Außenkontur, insbesondere einer äußeren Wandung, des Steuerelements ausgebildet sein. Vorzugsweise kann dabei das Steuermittel zumindest teilweise spiralförmig verlaufen und/oder eine bei Rotation in die zweite Steuerlage zunehmende Breite aufweisen. Somit kann die Bewegung des Sperrelements zuverlässig durch das Steuermittel gesteuert werden. Die Breite bezeichnet dabei vorzugsweise die Erstreckung der Führung in Richtung der Rotationsachse des Steuerelements.

Es kann von Vorteil sein, wenn bei der erfindungsgemäßen Verriegelungsvorrichtung und/oder dem erfindungsgemäßen Verfahren ein Detektionsmittel des Steuerelements als Wand und/oder Ausnehmung, insbesondere einer inneren Wandung des Steuerelements, ausgebildet ist. Die Ausnehmung kann dabei bspw. für einen bestimmten Winkelbereich des Steuerelements vorgesehen sein, so dass bei einer Rotation des Steuerelements in Abhängigkeit von der Steuerlage ein Lichtstrahl bzw. Lichtsignal des zweiten Detektionselements durch die Ausnehmung freigegeben bzw. durch die Wand absorbiert wird. Hierdurch wird gewährleistet, dass zuverlässig die Steuerlage des Steuerelements durch das zweite Detektionselement in Zusammenwirkung mit dem Detektionsmittel erfasst werden kann.

Zudem ist es im Rahmen der Erfindung denkbar, dass das Sperrelement ein Basisteil aufweist, welches (in direkten oder indirekten Kontakt) z. B. stets und/oder sowohl in der Verriegelungs- als auch in der Entriegelungsposition in Wirkverbindung mit dem Steuerelement steht, und vorzugsweise weiter ein Wirkteil aufweist, welches z. B. ausschließlich in der Verriegelungsposition und/oder Zwischenposition in direkter Verbindung (z. B. direkten Kontakt) mit dem funktionswesentlichen Bauteil steht und vorzugsweise kraft- und/oder formschlüssig mit dem funktionswesentlichen Bauteil zur Verriegelung des Bauteils insbesondere in einer Aufnahme des funktionswesentlichen Bauteils in der Verriegelungsposition zusammenwirkt. Die formschlüssige Zusammenwirkung wird dabei bspw. durch Zähne eines Zahnkranzes des funktionswesentlichen Bauteils bewirkt, welche die Aufnahme zumindest teilweise begrenzen. Der Kraftschluss wird bspw. dadurch erreicht, dass das Sperrelement und/oder zumindest das Wirkteil federbeaufschlagt ausgeführt ist, und somit bspw. aufgrund der Federkraft eines Federelements das Sperrelement in Richtung des funktionswesentlichen Bauteils gedrückt wird. Somit kann zuverlässig das funktionswesentliche Bauteil durch das Sperrelement in der Verriegelungsposition verriegelt bzw. arretiert werden. Ferner umfasst insbesondere das Basisteil und/oder das Wirkteil ein Detektionsmittel, um die Position des Sperrelements in Zusammenwirkung mit dem Detektionselement zu erfassen.

In einer weiteren Möglichkeit kann es vorgesehen sein, dass das Sperrelement, insbesondere das Basisteil, durch ein Federelement belastet ist, wobei das Federelement das Sperrelement (z. B. stets) in die Verriegelungsposition bewegt und/oder drückt. Zum einen wird dabei durch das Federelement die benötigte Kraft erzeugt, um das Sperrelement zuverlässig in der Verriegelungsposition zu halten und/oder den Kraftschluss mit dem funktionswesentlichen Bauteil zu bewirken. Zum anderen kann hierdurch der Vorteil erzielt werden, dass das Federelement als Zwischenstufe zwischen dem Steuerelement und dem Sperrelement bzw. dem Wirkteil des Sperrelements ein Spiel für die Bewegung des Sperrelements bzw. des Wirkteils des Sperrelements bietet.

In einer weiteren Möglichkeit kann im Rahmen der Erfindung das Wirkteil materialunterschiedlich zum Basisteil, bevorzugt mit einer höheren Festigkeit als das Basisteil, ausgebildet sein, wobei bevorzugt das Basisteil Kunststoff aufweist und/oder als Spritzgussteil ausgeführt ist, und besonders bevorzugt das Wirkteil aus Metall ausgebildet ist. Alternativ oder zusätzlich kann dabei das Sperrelement einstückig und/oder starr ausgeführt sein und/oder das Basisteil starr und/oder unbeweglich mit dem Wirkteil verbunden sein. Alternativ ist das Sperrelement zumindest zweigeteilt ausgeführt, so dass es das Wirkteil und das Basisteil aufweist, wobei ein Spiel für die Bewegung des Sperrelements z. B. dadurch bewirkt wird, dass das Basisteil relativ zum Wirkteil (z. B. federbelastet) beweglich ist. Es ist denkbar, dass das Detektionsmittel des Sperrelements zur Zusammenwirkung mit dem Detektionselement starr und/oder stets mit gleichbleibendem Abstand mit dem Wirkteil direkt oder indirekt (z. B. über das Basisteil) verbunden ist.

Des Weiteren kann es vorteilhaft sein, wenn zumindest ein bewegbares Arretierungselement vorgesehen ist, um das Sperrelement in der Verriegelungsposition und/oder in der Entriegelungsposition, insbesondere kraft- und/oder formschlüssig (z. B. in einer Ausnehmung des Sperrelements), zu arretieren, wobei bevorzugt das Detektionselement, vorzugsweise ein weiteres Detektionselement, am oder relativ zum Arretierungselement angeordnet ist, besonders bevorzugt derart, dass die Position des Arretierungselements detektierbar ist. Bevorzugt ist zumindest in der Verriegelungsposition das Sperrglied, insbesondere das Wirkteil, durch das Arretierungselement arretierbar. Das Arretierungselement bewirkt dabei insbesondere, dass unabhängig von einer Bewegung des Steuerelements und/oder eines (Steuer-) Lagewechsels des Steuerelements das Sperrelement in der Entriegelungsposition oder in der Verriegelungsposition gehalten wird und bietet damit eine zusätzliche Sicherheit für den Betrieb des Fahrzeugs. Insbesondere wird hierdurch ein unerwünschter oder fehlerhafter Positionswechsel vermieden.

Es ist im Rahmen der Erfindung denkbar, dass weitere erste und/oder zweite und/oder mindestens ein weiteres Detektionselement vorgesehen ist. Somit kann eine mindestens zwei- oder dreifache Redundanz geschaffen werden, wenn z. B. neben dem ersten Detektionselement und dem zweiten Detektionselement noch das weitere Detektionselement zur Detektion der Position des Arretierungselements vorgesehen ist. Im Rahmen der Erfindung kann es dabei vorgesehen sein, dass das zweite Detektionselement und/oder das weitere Detektionselement in gleicher Weise ausgestaltet sind, wie das erste Detektionselement. Selbstverständlich beziehen sich Merkmale, welche im Zusammenhang mit dem (ersten) Detektionselement beschrieben sind, auch im Zusammenhang mit dem zweiten und/oder dem weiteren Detektionselement.

Ferner ist es denkbar, dass zumindest ein Verschlusselement vorgesehen ist, um eine Öffnung des Gehäuses der erfindungsgemäßen Verriegelungsvorrichtung für das Sperrelement in der Entriegelungsposition zu verschließen und in der Verriegelungsposition freizugeben, wobei vorzugsweise das Detektionselement, bevorzugt ein weiteres Detektionselement, am oder relativ zum Verschlusselement angeordnet ist, bevorzugt derart, dass die Position des Verschlusselementes detektierbar ist. Das Verschlusselement bietet dabei eine zusätzliche Sicherheit, da ein Wechsel in die Verriegelungsposition bei einer verschlossenen Öffnung zuverlässig verhindert wird, z. B. während des Betriebs des Fahrzeugs. Somit kann bspw. eine Blockierung der Lenkung während des Betriebs verhindert werden. Es ist dabei insbesondere möglich, dass neben dem ersten und/oder dem zweiten Detektionselement zumindest ein oder zwei weitere Detektionselemente vorgesehen sind, wie ein drittes Detektionselement zur Erfassung der Position eines Arretierungselements und/oder ein viertes Detektionselement zur Erfassung der Position des Verschlusselements.

Ebenfalls ist es im Rahmen der Erfindung denkbar, dass das Sperrelement durch einen Antrieb über insbesondere das Steuerelement zwischen der Verriegelungsposition und der Entriegelungsposition hin- und her bewegbar ist. Dabei kann zumindest ein Detektionselement innerhalb des Sperrelements vorgesehen sein, um Platz zu sparen. Das Steuerelement kann außenseitig einen Zahnkranz für eine Verbindung mit dem Antrieb aufweisen, wobei insbesondere der Antrieb mit dem Zahnkranz vom Steuerelement ein Schneckengetriebe bilden können. Das Sperrelement kann platzsparend ebenfalls innenseitig am Steuerelement angeordnet sein und von diesem bewegt werden. Auch ist es denkbar, dass das Sperrelement außenseitig am Steuerelement angesteuert wird, um eine besonders stabile Führung des Sperrelements z. B. durch einen Teil des Gehäuses zu erreichen.

Ebenfalls Gegenstand der Erfindung ist ein Verfahren zum Verriegeln und/oder Entriegeln eines funktionswesentlichen Bauteils eines Fahrzeugs durch eine Verriegelungsvorrichtung, vorzugsweise durch eine erfindungsgemäße Verriegelungsvorrichtung. Die Verriegelungsvorrichtung umfasst dabei ein bewegbares Sperrelement, welches durch ein Steuerelement zumindest zwei Positionen einnehmen kann, nämlich
- eine Verriegelungsposition, in der das Sperrelement zur Sperrung des funktionswesentlichen Bauteils in einer Wirkverbindung mit dem funktionswesentlichen Bauteil steht, und
- eine Entriegelungsposition, in der das Sperrelement zur Entriegelung des funktionswesentlichen Bauteils in keiner Wirkverbindung mit dem funktionswesentlichen Bauteil steht, wobei
das Sperrelement durch einen Positionswechsel von der Entriegelungsposition in die Verriegelungsposition oder umgekehrt überführbar ist. Hierbei ist insbesondere vorgesehen, dass gemäß einem ersten Schritt die Position des Sperrelements als eine erste Position durch ein erstes Detektionselement in direkter Weise erfasst wird und gemäß einem zweiten Schritt die Position des Sperrelements als eine zweite Position durch ein zweites Detektionselement in indirekter Weise erfasst wird. Bevorzugt werden dabei die erste und zweite Position unabhängig voneinander erfasst. Besonders bevorzugt ist dabei die zweite Position eine in direkter Weise erfasste Steuerlage des Steuerelements. Damit bringt das erfindungsgemäße Verfahren die gleichen Vorteile mit sich, wie ausführlich mit Bezug auf eine erfindungsgemäße Verriegelungsvorrichtung erläutert worden sind. Zudem kann das erfindungsgemäße Verfahren geeignet sein, eine erfindungsgemäße Verriegelungsvorrichtung zu betreiben.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung von Teilen einer erfindungsgemäßen Verriegelungsvorrichtung,
- Figur 2: eine weitere schematische Darstellung von Teilen einer erfindungsgemäßen Verriegelungsvorrichtung,
- Figur 3: eine schematische Darstellung von Teilen einer erfindungsgemäßen Verriegelungsvorrichtung mit einem funktionswesentlichen Bauteil,
- Figur 4: eine weitere schematische Darstellung von Teilen einer erfindungsgemäßen Verriegelungsvorrichtung und eines funktionswesentlichen Bauteils und
- Figur 5 - 7: schematische Darstellungen von Teilen einer erfindungsgemäßen Verriegelungsvorrichtung für unterschiedliche Positionen und Steuerlagen.

In den nachfolgenden Figuren werden für die gleichen technischen Merkmale auch von unterschiedlichen Ausführungsbeispielen die identischen Bezugszeichen verwendet.

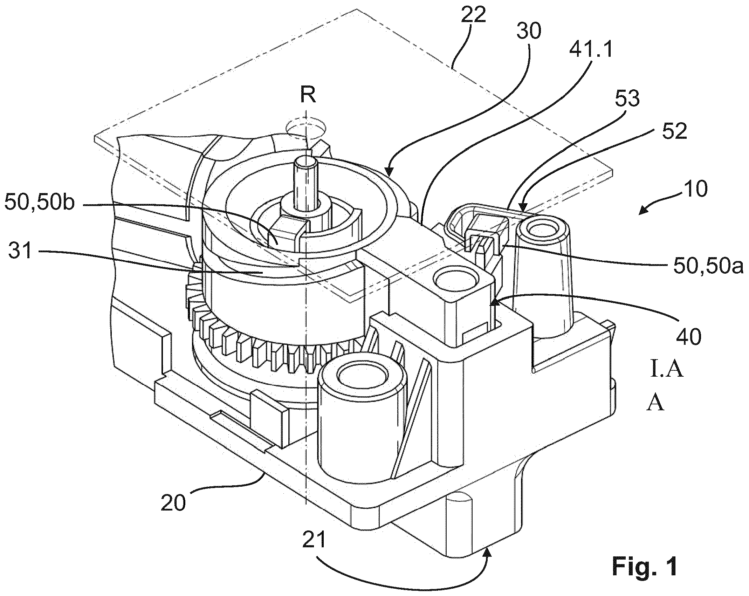

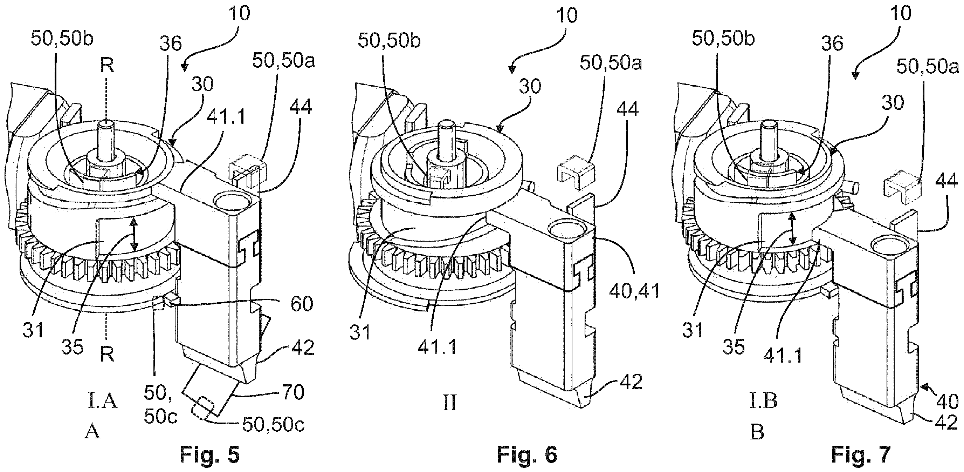

In Figur 1 sind schematisch Teile einer erfindungsgemäßen Verriegelungsvorrichtung 10 dargestellt. Es ist ein Gehäuse 20 der Verriegelungsvorrichtung 10 gezeigt, an welchem ein Steuerelement 30 und ein Sperrelement 40 angeordnet sind. Dabei befindet sich in Figur 1 das Sperrelement 40 in einer Entriegelungsposition I.A, in der das Sperrelement 40 zur Entriegelung des funktionswesentlichen Bauteils 1 in keiner Wirkverbindung mit dem funktionswesentlichen Bauteil 1 steht und/oder weitestgehend im Gehäuse 20 angeordnet ist. Dagegen ist in Figur 7 eine Verriegelungsposition I.B gezeigt, in der das Sperrelement 40 zur Sperrung des funktionswesentlichen Bauteils 1 in einer Wirkverbindung mit dem funktionswesentlichen Bauteil 1 steht und/oder aus dem Gehäuse 20 der Verriegelungsvorrichtung 10 durch eine Öffnung 21 des Gehäuses 20 herausragt. Das Sperrelement 40 ist durch das Steuerelement 30 von der Entriegelungsposition I.A in die Verriegelungsposition I.B oder umgekehrt überführbar und/oder bewegbar, wobei dieser Positionswechsel durch ein Steuermittel 31, insbesondere eine (außenseitige) Führung 31, des Steuerelements 30 ermöglicht wird. Es ist gemäß Figur 1 erkennbar, dass das Steuermittel 31 bspw. durch eine spiralförmige Nut gebildet wird, deren Breite bei einer Bewegung des Steuerelements 30 von einer ersten Steuerlage A in eine zweite Steuerlage B zunimmt. Die Bewegung von der ersten Steuerlage A in die zweite Steuerlage B, d. h. ein Lagewechsel des Steuerelements 30, ermöglicht dabei den Positionswechsel des Sperrelements 40 von der Entriegelungsposition I.A in die Verriegelungsposition I.B. Während dieses Positionswechsels nimmt das Sperrelement 40 zumindest eine zwischen der Entriegelungsposition I.A und der Verriegelungsposition I.B liegende Zwischenposition II ein, in welcher keine Sperrung des funktionswesentlichen Bauteils 1 (d. h. z. B. eine form- und/oder kraftschlüssige Arretierung des funktionswesentlichen Bauteils 1) erfolgt. Das Sperrelement 40 ist durch die außenseitige Ansteuerung vom Steuerelement 30 selber besonders stabil in einer Längsführung vom Gehäuse 20 geführt.

Außerdem sind in Figur 1 ein Detektionselement 50, d. h. ein erstes Detektionselement 50a, sowie ein zweites Detektionselement 50b dargestellt. Das erste und/oder zweite Detektionselement 50a, 50b können dabei bspw. an einer Leiterplatte 22 der erfindungsgemäßen Verriegelungsvorrichtung 10 angeordnet sein. Diese Leiterplatte 22 ist bspw. oberhalb des Steuerelements 30 und/oder des Sperrelements 40 angeordnet. Unterhalb der Leiterplatte 22 können dabei, z. B. ortsfest, das erste Detektionselement 50a und/oder das zweite Detektionselement 50b und/oder weitere Detektionselemente 50c vorgesehen sein. Auf der gegenüberliegenden Seite (oberhalb der Leitplatte 22) kann die Leiterplatte 22 bspw. elektrische Leiterbahnen und/oder weitere elektronische Komponenten aufweisen, insbesondere auch zur Verbindung mit einer nicht gezeigten Fahrzeugelektronik.

Des Weiteren ist in Figur 1 eine (optional vorgesehene) Schutzanordnung 52 des (ersten) Detektionselements 50, 50a gezeigt, welche dazu dient, Störeinwirkungen zu reduzieren, die die Erfassung des (ersten) Detektionselements 50, 50a beeinträchtigen. Selbstverständlich kann eine solche Schutzanordnung 52 auch für das zweite und/oder die weiteren Detektionselemente 50b, 50c vorgesehen sein. Die Schutzanordnung 52 weist mindestens ein Schutzelement 53 auf, welches z. B. als Wandung 53 des Detektionselements 50 ausgeführt ist. Zumindest das zweite Detektionselement 50b ist bspw. in einem inneren Freiraum vom Steuerelement 30 angeordnet.

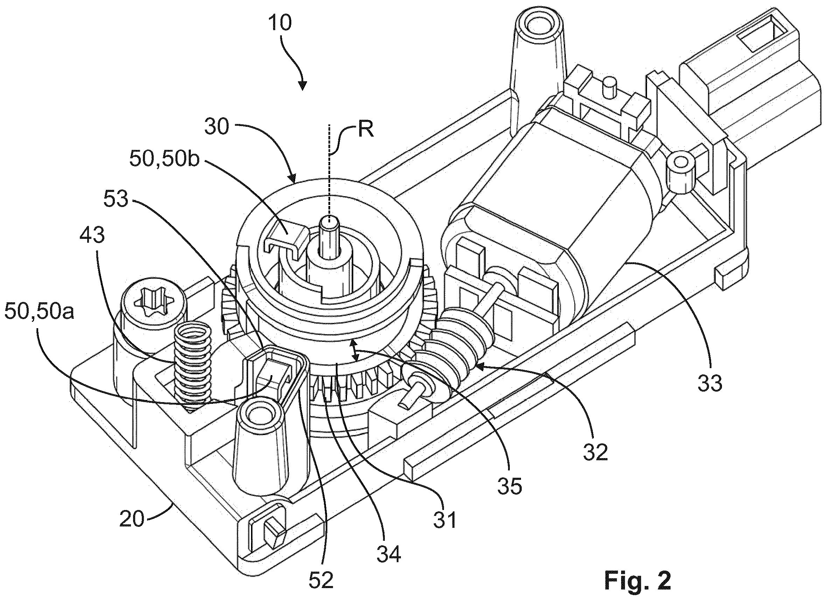

Figur 2 zeigt Teile einer erfindungsgemäßen Verriegelungsvorrichtung 10 in einer schematischen perspektivischen Ansicht. Es ist eine Antriebseinheit 33 zu sehen, welche über ein Getriebe 32 das Steuerelement 30 antreibt. Die Antriebseinheit 33 ist dabei bspw. als Motor und/oder das Getriebe 32 als Schneckengetriebe ausgeführt. Zur Übertragung des Drehmoments der Antriebseinheit 33 an das Steuerelement 30 umfasst das Steuerelement 30 bspw. einen Zahnkranz 34 und ist drehbar im Gehäuse 20 gelagert. Die Rotationsachse R des Steuerelements 30 ist dabei bspw. parallel zur Bewegungsrichtung BR des Sperrelements 40, wobei z. B. der Positionswechsel des Sperrelements 40 als lineare Bewegung entlang der Bewegungsrichtung BR erfolgt. In Abhängigkeit von der Rotationsrichtung der Antriebseinheit 33 und/oder des Steuerelements 30 erfolgt dabei entweder ein Positionswechsel von der Verriegelungsposition I.B in die Entriegelungsposition I.A oder von der Entriegelungsposition I.A in die Verriegelungsposition I.B. Der Positionswechsel von der Verriegelungsposition I.B in die Entriegelungsposition I.A ist dabei bevorzugt zwangsweise durch das Steuerelement 30 geführt, wobei die Bewegung des Sperrelements 40 von der Entriegelungsposition I.A in die Verriegelungsposition I.B bevorzugt ein Spiel aufweist. Dieses Spiel wird vorzugsweise durch die gezeigte zunehmende Breite 35 des Steuermittels 31 des Steuerelements 30 und/oder durch ein Federelement 43 bewirkt. Das Federelement 43 drückt dabei bspw. das Sperrelement 40 oder zumindest Teile des Sperrelements 40 in Richtung des funktionswesentlichen Bauteils 1 (entlang der Bewegungsrichtung BR). Ist die Bewegung des Sperrelements 40 in Richtung des funktionswesentlichen Bauteils 1, vorzugsweise in eine Aufnahme 3 des funktionswesentlichen Bauteils 1, blockiert, so kann aufgrund des Federelements 43 (und des Spiels) das Sperrelement 40 (und/oder ein Wirkteil 42 des Sperrelements 42) in der Zwischenposition II verbleiben. Außerdem kann nach Freigabe der Aufnahme 3 bzw. Freigabe der Blockade (im Normalfall, z. B. durch eine Rotation des funktionswesentlichen Bauteils 1) das Sperrelement 40 bzw. das Wirkteil 42 automatisch weiter in die Aufnahme 3 in die Verriegelungsposition I.B durch das Federelement 43 bewegt werden. Somit kann sichergestellt werden, dass in jedem Fall (z. B. bei einer Nutzung / Drehung des funktionswesentlichen Bauteils 1) die Verriegelung und Sperrung des funktionswesentlichen Bauteils 1 erfolgt und die Verriegelungsposition I.B eingenommen wird.

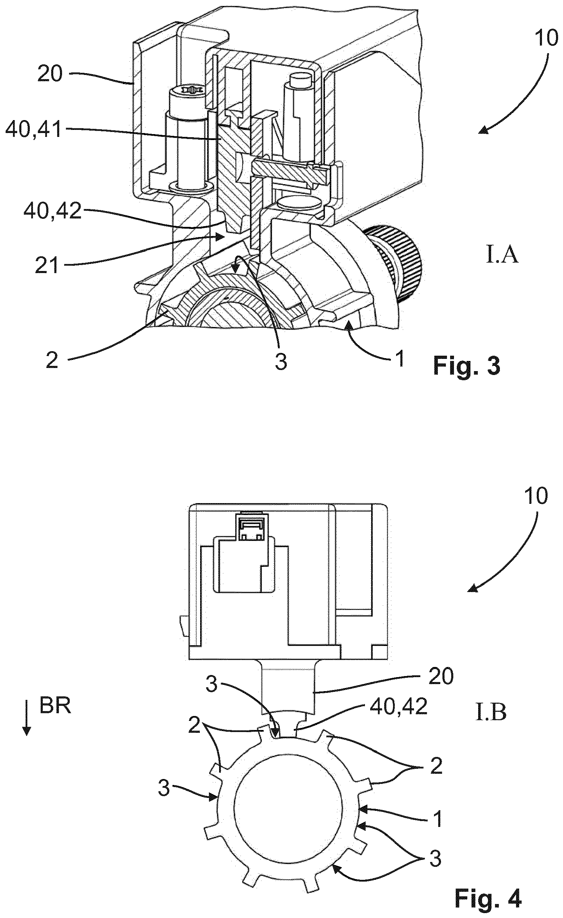

In Figur 3 sind Teile eines funktionswesentlichen Bauteils 1 dargestellt, wobei die Zähne 2 und die zwischen den Zähnen 2 vorgesehenen Aufnahmen 3 für das Sperrelement 40 dargestellt sind. Das Sperrelement 40 umfasst bspw. ein Basisteil 41 und ein Wirkteil 42. Zur Führung des Sperrelements 40 durch das Steuerelement 30 umfasst weiter das Basisteil 41 ein Gegensteuermittel 41.1, welches formschlüssig mit dem Steuermittel 31 des Steuerelements 30 zusammenwirkt, um einen Positionswechsel zu bewirken. Das Wirkteil 42 dient insbesondere zur Verriegelung des funktionswesentlichen Bauteils 1, und steht (insbesondere ausschließlich) in der Verriegelungsposition I.B in direkter Wirkverbindung mit dem funktionswesentlichen Bauteil 1 und bewirkt bevorzugt einen Form- und/oder Kraftschluss mit dem funktionswesentlichen Bauteil 1, wenn es sich in der Verriegelungsposition I.B in der Aufnahme 3 des funktionswesentlichen Bauteils 1 befindet. In Figur 3 ist dabei die Entriegelungsposition I.A und in Figur 4 die Verriegelungsposition I.B dargestellt. Es ist ersichtlich, dass das funktionswesentliche Bauteil 1 in einem derartigen Winkel stehen kann, dass bei einem Positionswechsel von der Entriegelungsposition I.A in die Verriegelungsposition I.B das Wirkteil 42 auf einen Zahn 2 trifft und somit nicht in die Aufnahme 3 eingebracht werden kann. In diesem Fall kann das Sperrelement 40 nicht vollständig in die Verriegelungsposition I.B bewegt werden und verbleibt daher in der Zwischenposition II. Um eine solche unvollständige Verriegelung sicher zu erkennen, ist zumindest ein Detektionselement 50, d. h. insbesondere ein erstes Detektionselement 50a, vorgesehen, um die Position des Sperrelements 40 in direkter Weise zu erfassen. Diese Funktionsweise ist in den Figuren 5 bis 7 näher dargestellt.

Gemäß Figur 5 befindet sich das Sperrelement 40 in der Entriegelungsposition I.A, wobei ein Positionswechsel in die in Figur 7 dargestellte Verriegelungsposition I.B durchgeführt wird. Im Laufe des Positionswechsels nimmt dabei das Sperrelement 40 zumindest eine Zwischenposition II ein, welche in Figur 6 gezeigt ist. Hierbei ist erkennbar, dass durch das Detektionselement 50, insbesondere durch ein erstes Detektionselement 50a, die tatsächliche Position, bevorzugt (zumindest oder ausschließlich) die Entriegelungsposition I.A, des Sperrelements 40 sicher erfasst werden kann. Sollte die in Figur 7 gezeigt Verriegelungsposition I.B aufgrund einer blockierten Bewegung in einem Blockierfall nicht durch das Sperrelement 40 und/oder das Wirkteil 42 eingenommen werden können, so verbleibt das Sperrelement 40 in einer Position (z. B. Zwischenposition II), und wird erst bei einer Freigabe der Blockierung weiter in die Verriegelungsposition I.B bewegt.

In den Figuren 5 bis 7 ist das erste Detektionselement 50a derart angeordnet, dass die Einnahme der Entriegelungsposition I.A des Sperrelements 40 eindeutig ("positiv") durch das erste Detektionselement 50a erfasst werden kann. Nur in der Entriegelungsposition I.A greift ein Detektionsmittel 44 des Sperrelements 40 in den Detektionsraum 51 des ersten Detektionselements 50a ein. Außerhalb der Entriegelungsposition I.A, d. h. in der Zwischenposition II bzw. den Zwischenpositionen II und in der Verriegelungsposition I.B, befindet sich das Detektionsmittel 44 (vollständig) außerhalb des Detektionsraums 51. Somit ist durch das erste Detektionselement 50a einerseits die Entriegelungsposition I.A als eine erste Position und andererseits die Zwischenposition II mit der Verriegelungsposition I.B als eine zweite Position eindeutig erfassbar ist. Erst wenn sich das Sperrelement 40 in der Entriegelungsposition I.A vollständig in den Detektionsraum 51 bewegt hat, erfolgt z. B. die Unterbrechung eines Lichtstrahls im Detektionsraum 51, und es wird die Entriegelungsposition I.A als tatsächliche Position des Sperrelements 40 durch das Detektionselement 50 positiv erfasst, um so die Sicherheit beim Betrieb des Fahrzeuges zu erhöhen. Somit wird bspw. sicher vermieden, dass während des Betriebs des Fahrzeuges die zweite Position (außerhalb der Entriegelungsposition I.A) eingenommen ist, und aufgrund des Spiels ein Wechsel in die Verriegelungsposition I.B im Betrieb des Fahrzeuges stattfindet, da die Zwischenposition II von der Entriegelungsposition I.A zuverlässig abgegrenzt werden kann. Selbstverständlich können zur Steigerung der Redundanz auch weitere erste Detektionselemente 50a vorgesehen sein.

Alternativ oder zusätzlich ist es daher auch denkbar, dass durch das erste Detektionselement 50a (und/oder auch durch weitere Detektionselemente 50c oder weitere erste Detektionselemente 50a) einerseits die Entriegelungsposition I.A mit der Zwischenposition II als eine erste Position und andererseits die Verriegelungsposition I.B als eine zweite Position eindeutig erfassbar ist. Bevorzugt greift in diesem Fall ein Detektionsmittel 44 sowohl in der Entriegelungsposition I.A als auch in der Zwischenposition II in einen Detektionsraum 51 des ersten Detektionselements 50a ein, sodass das Detektionselement 50 ein elektrisches Signal liefern kann, wenn hierdurch z. B. ein Lichtstrahl unterbrochen und/oder reflektiert wird. Erst wenn sich das Sperrelement 40 in der Verriegelungsposition I.B vollständig aus dem Detektionsraum 51 bewegt hat, wird die Verriegelungsposition I.B als tatsächliche Position des Sperrelements 40 durch das Detektionselement 50 erfasst.

Ferner ist in den Figuren 5 bis 7 schematisch gezeigt, dass auch weitere Detektionselemente 50c vorgesehen sein können. So kann bspw. ein weiteres Detektionselement 50c zur Erfassung der Position eines Arretierungselements 60 vorgesehen sein (Figur 5) und/oder ein weiteres Detektionselement 50c zur Erfassung der Position eines Verschlusselements 70 genutzt werden (Figur 5). Das Arretierungselement 60 greift dabei bspw. in einer Ausnehmung des Sperrelements 40 ein, um dieses form- und/oder kraftschlüssig zu arretieren, und damit einen Positionswechsel zu verhindern. Insbesondere ist das Arretierungselement 60 am Steuerelement 30 angeordnet und/oder mit diesem fest verbunden und/oder arretiert das Sperrelement 40 (nur) in der Entriegelungsposition I.A. Bevorzugt dient das Verschlusselement 70 zur zusätzlichen Sicherung des Sperrelements 40 in der Entriegelungsposition I.A.

Das Detektionselement 50, insbesondere ein erstes Detektionselement 50a, dient dazu, in direkter Weise die Position des Sperrelements 40 zu erfassen. Weiter kann auch ein zweites (oder auch zumindest ein weiteres) Detektionselement 50b (50c) vorgesehen sein, welches die Position des Sperrelements 40 in indirekter Weise erfasst. Dies wird z. B. dadurch ermöglicht, dass das zweite Detektionselement 50b am Steuerelement 30 angeordnet ist. Das zweite Detektionselement 50b kann dabei bspw. unabhängig von dem ersten Detektionselement 50a die Position des Sperrelements 40 indirekt erfassen, d. h. über die direkte Erfassung der Lage des Steuerelements 30. Hierzu weist das Steuerelement 30 bspw. eine Wand 36 auf, welche als (Steuerelement-) Detektionsmittel 36 dient und in einer ersten oder (alternativ) zweiten Steuerlage A, B in einen (zweiten) Detektionsraum des zweiten Detektionselement 50b eingreift. In gleicher Weise ermöglicht ein Detektionsmittel 44 des Sperrelements 40 die Detektion der tatsächlichen Position des Sperrelements 40 durch das erste Detektionselement 50a. Das Detektionsmittel 44 umfasst dabei bspw. ein lichtabsorbierendes oder lichtreflektierendes Material, und greift entweder in der Entriegelungsposition I.A (und/oder in der Zwischenposition II) oder in der Verriegelungsposition I.B in einen Detektionsraum 51 des ersten Detektionselements 50a ein. Das Detektionselement 50, insbesondere das erste Detektionselement 50a, und/oder das zweite oder weitere Detektionselemente 50b, 50c sind dabei bspw. als Lichtschranke ausgebildet, so dass ein Eingreifen des Detektionsmittels 44 in den Detektionsraum 51 des entsprechenden Detektionselements 50, 50a, 50b, 50c eine elektrooptische Erfassung ermöglicht.

### Bezugszeichenliste

- 1: Bauteil
- 2: Zahn
- 3: Aufnahme

- 10: Verriegelungsvorrichtung
- 20: Gehäuse
- 21: Öffnung
- 22: Leiterplatte

- 30: Steuerelement
- 31: Steuermittel, Führung
- 32: Getriebe
- 33: Antriebseinheit
- 34: Zahnkranz
- 35: Breite der Führung
- 36: Steuerelement-Detektionsmittel

- 40: Sperrelement
- 41: Basisteil
- 41.1: Gegensteuermittel
- 42: Wirkteil
- 43: Federelement
- 44: Detektionsmittel

- 50: Detektionselement

- 50a: erstes Detektionselement
- 50b: zweites Detektionselement
- 50c: weiteres Detektionselement
- 51: Detektionsraum
- 52: Schutzanordnung
- 53: Schutzelement

- 60: Arretierungselement

- 70: Verschlusselement

- A: erste Steuerlage
- B: zweite Steuerlage
- I.A: Entriegelungsposition
- I.B: Verriegelungsposition
- II: Zwischenposition

- R: Rotationsachse
- BR: Bewegungsrichtung

## Patentansprüche

1. Verriegelungsvorrichtung (10) zum Verriegeln und/oder Entriegeln eines funktionswesentlichen Bauteils (1) eines Fahrzeuges, insbesondere einer Lenksäule, mit einem bewegbaren Sperrelement (40), welches durch ein Steuerelement (30) zumindest zwei Positionen einnehmen kann, nämlich
- eine Verriegefungsposition (I.B), in der das Sperrelement (40) zur Sperrung des funktionswesentlichen Bauteils (1) in einer Wirkverbindung mit dem funktionswesentlichen Bauteil (1) steht, und
- eine Entriegelungsposition (I.A), in der das Sperrelement (40) zur Entriegelung des funktionswesentlichen Bauteils (1) in keiner Wirkverbindung mit dem funktionswesentlichen Bauteil (1) steht, wobei
das Sperrelement (40) durch einen Positionswechsel von der Entriegelungsposition (I.A) in die Verriegelungsposition (I.B) oder umgekehrt überführbar ist, wobei ein Detektionselement (50) zur Erfassung der Position des Sperrelements (40) vorgesehen ist,
**dadurch gekennzeichnet,**
**dass** durch das Detektionselement (50) zumindest eine der Positionen des Sperrelements (40) direkt erfassbar ist, wobei
das Steuerelement (30) in eine erste Steuerlage (A) und in eine zweite Steuerlage (B) bringbar ist, und das Steuerelement (30) derart mit dem Sperrelement (40) zusammenwirkt, dass in der ersten Steuerlage (A) durch das Sperrelement (40) nur die Entriegelungsposition (I.A) einnehmbar ist, wobei in der zweiten Steuerlage (B) das Sperrelement (40) für den Positionswechsel freigegeben ist, wobei das Detektionselement (50) ein erstes Detektionselement (50a) ist, und ein zweites Detektionselement (50b) vorgesehen ist, welches derart relativ zum Steuerelement (30) angeordnet ist, dass die Steuerlage des Steuerelements (30) unabhängig von der Position des Sperrelements (40) detektierbar ist.

2. Verriegelungsvorrichtung (10) nach Anspruch 1,
**dadurch gekennzeichnet,**
**dass** das erste Detektionselement (50a) und das zweite Detektionselement (50b) als elektrooptischer Sensor, insbesondere als Lichtschranke, ausgebildet ist.

3. Verriegelungsvorrichtung (10) nach Anspruch 1 oder 2,
**dadurch gekennzeichnet,**
**dass** das Steuerelement (30) ein Steuermittel (31), insbesondere in Form einer Führung (31), aufweist, wobei das Sperrelement (40) ein Gegensteuermittel (41.1) umfasst, wobei das Steuermittel (31) mit dem Gegensteuermittel (41.1) formschlüssig zusammenwirkt, um einen Positionswechsel zu bewirken.

4. Verriegelungsvorrichtung (10) nach einem der vorhergehenden Ansprüche,
**dadurch gekennzeichnet,**
**dass** das Detektionselement (50), insbesondere das erste Detektionselement (50a), und/oder das zweite Detektionselement (50b), an einer Leiterplatte (22) angeordnet sind, nämlich ortsfest auf einer Seite der Leiterplatte (22), welche dem Sperrelement (40) und/oder dem Steuerelement (30) zugewandt ist.

5. Verriegelungsvorrichtung (10) nach einem der vorhergehenden Ansprüche,
**dadurch gekennzeichnet,**
**dass** das Detektionselement (50), insbesondere das erste Detektionselement (50a), und/oder das zweite Detektionselement (50b), einen Detektionsraum (51) aufweist, wobei das Steuerelement (30) und/oder das Sperrelement (40) jeweils ein dazu komplementäres Detektionsmittel (36, 44) umfassen, wobei vorzugsweise bei einem Einbringen des Detektionsmittels (36, 44) in den Detektionsraum (51) eine Detektion erfolgt.

6. Verriegelungsvorrichtung (10) nach einem der vorhergehenden Ansprüche,
**dadurch gekennzeichnet,**
**dass** durch einen Lagewechsel des Steuerelements (30) von einer ersten Steuerlage (A) in eine zweite Steuerlage (B) ein Positionswechsel des Sperrelements (40) von der Entriegelungsposition (I.A) in die Verriegelungsposition (I.B) im Normalfall durchgeführt wird, wobei in einem Blockierfall ein vollständiger Positionswechsel des Sperrelements (40) verhindert ist.

7. Verriegelungsvorrichtung (10) nach einem der vorhergehenden Ansprüche,
**dadurch gekennzeichnet,**
**dass** das Sperrelement (40) derart ausgebildet ist, dass es im Normalfall durch den Positionswechsel in eine Aufnahme (3) des funktionswesentlichen Bauteils (1) eingebracht wird, und das funktionswesentliche Bauteil (1) hierdurch formschlüssig verriegelt, wobei in einem Blockierfall das funktionswesentliche Bauteil (1), insbesondere Zähne (2) des funktionswesentlichen Bauteils (1), einen Positionswechsel blockieren.

8. Verriegelungsvorrichtung (10) nach einem der vorhergehenden Ansprüche,
**dadurch gekennzeichnet,**
**dass** bei einem unvollständigen Positionswechsel in einem Blockierfall das Sperrelement (40) in der Entriegelungsposition (I.A) und/oder einer Zwischenposition (II) verbleibt, wobei insbesondere von dem ersten und/oder zweiten Detektionselement (50a, 50b) die Entriegelungsposition (I.A) und/oder die Zwischenposition (II) von der Verriegelungsposition (I.B) unterscheidbar ist.

9. Verriegelungsvorrichtung (10) nach einem der vorhergehenden Ansprüche,
**dadurch gekennzeichnet,**
**dass** das Steuerelement (30) drehbar in der Verriegelungsvorrichtung (10) gelagert ist, wobei ein Wechsel von einer ersten Steuerlage (A) in eine zweite Steuerlage (B) durch eine Rotation des Steuerelements (30) durchführbar ist.

10. Verriegelungsvorrichtung (10) nach einem der vorhergehenden Ansprüche,
**dadurch gekennzeichnet,**
**dass** das Steuermittel (31) zwischen der ersten Steuerlage (A) und der zweiten Steuerlage (B) ein derartig zunehmendes Spiel, insbesondere Führungsspiel, aufweist, dass der Positionswechsel zunehmend durchführbar ist.

11. Verriegelungsvorrichtung (10) nach einem der vorhergehenden Ansprüche,
**dadurch gekennzeichnet,**
**dass** das Sperrelement (40) ein Basisteil (41) aufweist, welches in Wirkverbindung mit dem Steuerelement (30) steht, und weiter ein Wirkteil (42) aufweist, welches in der Verriegelungsposition (I.B) in direkter Wirkverbindung mit dem funktionswesentlichen Bauteil (1) steht, und kraft- und/oder formschlüssig mit dem funktionswesentlichen Bauteil (1) zur Verriegelung des funktionswesentlichen Bauteils (1) zusammenwirkt.

12. Verriegelungsvorrichtung (10) nach einem der vorhergehenden Ansprüche,
**dadurch gekennzeichnet,**
**dass** das Wirkteil (42) materialunterschiedlich zum Basisteil (41), bevorzugt mit einer höheren Festigkeit als das Basisteil (41), ausgebildet ist.

13. Verfahren zum Verriegeln und/oder Entriegeln eines funktionswesentlichen Bauteils (1) eines Fahrzeuges durch eine Verriegelungsvorrichtung (10), mit einem bewegbaren Sperrelement (40), welches durch ein Steuerelement (30) zumindest zwei Positionen einnehmen kann, nämlich
- eine Verriegelungsposition (I.B), in der das Sperrelement (40) zur Sperrung des funktionswesentlichen Bauteils (1) in einer Wirkverbindung mit dem funktionswesentlichen Bauteil (1) steht, und
- eine Entriegelungsposition (I.A), in der das Sperrelement (40) zur Entriegelung des funktionswesentlichen Bauteils (1) in keiner Wirkverbindung mit dem funktionswesentlichen Bauteil (1) steht, wobei
das Sperrelement (40) durch einen Positionswechsel von der Entriegelungsposition (I.A) in die Verriegelungsposition (I.B) oder umgekehrt überführt wird, wobei die nachfolgenden Schritte vorgesehen sind:
a) Erfassen zumindest einer der Positionen des Sperrelementes (40) als eine erste Position durch ein erstes Detektionselement (50a) in direkter Weise,
b) Erfassen zumindest einer der Positionen des Sperrelementes (40) als eine zweite Position durch ein zweites Detektionselement (50b) in indirekter Weise,
wobei die erste und zweite Position unabhängig voneinander erfasst werden.

14. Verfahren nach Anspruch 13,
**dadurch gekennzeichnet,**
**dass** eine Verriegelungsvorrichtung (10) nach einem der vorhergehenden Vorrichtungsansprüche vorgesehen ist.

## Claims

1. Locking device (10) for locking and/or unlocking a functionally essential component (1) of a vehicle, in particular a steering column, with a movable blocking element (40) which can assume at least two positions by means of a control element (30), namely
- a locking position (I.B) in which the blocking element (40) for blocking the functionally essential component (1) is in an operative connection with the functionally essential component (1), and
- an unlocking position (I.A) in which the blocking element (40) for unlocking the functionally essential component (1) is not in any operative connection with the functionally essential component (1), wherein
the blocking element (40) can be transferred from the unlocking position (I.A) into the locking position (I.B) or vice versa by a change of position, wherein
a detection element (50) is provided for detecting the position of the blocking element (40),
**characterized in that,**
at least one of the positions of the blocking element (40) can be directly detected by the detection element (50), wherein it is possible to bring the control element (30) into a first control position (A) and into a second control position (B), and the control element (30) interacting with the blocking element (40) in such a way that, in the first control position (A), only the unlocking position (I.A) can be assumed, wherein in the second control position (B) the blocking element (40) is released for the change of position, wherein the detection element (50) is a first detection element (50a), and a second detection element (50b) is provided, which is arranged relative to the control element (30) in such a way that the control position of the control element (30) can be detected independently of the position of the blocking element (40).

2. Locking device (10) according to claim 1,
**characterized in that,**
the first detection element (50a) and the second detection element (50b) is designed as an electrooptical sensor, in particular as a light barrier.

3. Locking device (10) according to claim 1 or 2,
**characterized in that,**
the control element (30) has a control means (31), in particular in the form of a guide (31), the blocking element (40) comprising a counter-control means (41.1), the control means (31) interacting with the counter-control means (41.1) in a form-fitting manner in order to effect a change of position.

4. Locking device (10) according to one of the preceding claims,
**characterized in that,**
the detection element (50), in particular the first detection element (50a), and/or the second detection element (50b), are arranged on a printed circuit board (22), namely in a fixed position on a side of the printed circuit board (22) which faces the blocking element (40) and/or the control element (30).

5. Locking device (10) according to one of the preceding claims,
**characterized in that,**
the detection element (50), in particular the first detection element (50a), and/or the second detection element (50b), has a detection space (51), the control element (30) and/or the blocking element (40) each comprising a detection means (36, 44) complementary thereto, detection preferably taking place when the detection means (36, 44) is introduced into the detection space (51).

6. Locking device (10) according to one of the preceding claims,
**characterized in that,**
a change in position of the blocking element (40) from the unlocking position (I.A) to the locking position (I.B) is normally carried out by a change in position of the control element (30) from a first control position (A) to a second control position (B), a complete change in position of the blocking element (40) being prevented in a blocking situation.

7. Locking device (10) according to one of the preceding claims,
**characterized in that,**
the blocking element (40) is designed in such a way that it is normally introduced into a receptacle (3) of the functionally essential component (1) by the change of position, and the functionally essential component (1) is thereby positively locked, the functionally essential component (1), in particular teeth (2) of the functionally essential component (1), blocking a change of position in a blocking situation.

8. Locking device (10) according to one of the preceding claims,
**characterized in that,**
in the event of an incomplete change of position in a blocking situation, the blocking element (40) remains in the unlocking position (I.A) and/or an intermediate position (II), wherein, in particular, the first and/or second detection element (50a, 50b) can distinguish the unlocking position (I.A) and/or the intermediate position (II) from the locking position (I.B).

9. Locking device (10) according to one of the preceding claims,
**characterized in that,**
the control element (30) is rotatably mounted in the locking device (10), wherein a change from a first control position (A) to a second control position (B) can be performed by a rotation of the control element (30).

10. Locking device (10) according to one of the preceding claims,
**characterized in that,**
the control means (31) between the first control position (A) and the second control position (B) has such an increasing play, in particular guide play, that the change of position can be carried out increasingly.

11. Locking device (10) according to one of the preceding claims,
**characterized in that,**
the blocking element (40) has a base part (41) which is in operative connection with the control element (30), and further has an operative part (42) which, in the locking position (I.B), is in direct operative connection with the functionally essential component (1) and interacts in a non-positive and/or positive manner with the functionally essential component (1) in order to lock the functionally essential component (1).

12. Locking device (10) according to one of the preceding claims,
**characterized in that,**
the operative part (42) is formed with a different material from the base part (41), preferably with a higher strength than the base part (41).

13. Method for locking and/or unlocking a functionally essential component (1) of a vehicle by means of a locking device (10), with a movable blocking element (40) which can assume at least two positions by means of a control element (30), namely
- a locking position (I.B) in which the blocking element (40) for blocking the functionally essential component (1) is in an operative connection with the functionally essential component (1), and
- an unlocking position (I.A) in which the blocking element (40) for unlocking the functionally essential component (1) is not in any operative connection with the functionally essential component (1), wherein
the blocking element (40) is transferred from the unlocking position (I.A) to the locking position (I.B) or vice versa by a change of position, the following steps being provided:
a) Detecting at least one of the positions of the blocking element (40) as a first position by a first detection element (50a) in a direct manner,
b) Detecting at least one of the positions of the blocking element (40) as a second position by a second detection element (50b) in an indirect manner,
wherein the first and second position are detected independently.

14. Method according to claim 13,
**characterized in that,**
a locking device (10) is provided according to one of the preceding device claims.

## Revendications

1. Dispositif de verrouillage (10) pour verrouiller et/ou déverrouiller un composant (1) fonctionnellement essentiel d'un véhicule, en particulier une colonne de direction, avec un élément de blocage (40) mobile qui peut prendre au moins deux positions au moyen d'un élément de commande (30), à savoir
- une position de verrouillage (I.B) dans laquelle l'élément de blocage (40) destiné à bloquer le composant fonctionnellement essentiel (1) est en liaison fonctionnelle avec le composant fonctionnellement essentiel (1), et
- une position de déverrouillage (I.A) dans laquelle l'élément de blocage (40) pour le déverrouillage du composant fonctionnellement essentiel (1) n'est pas en liaison fonctionnelle avec le composant fonctionnellement essentiel (1), dans laquelle
l'élément de blocage (40) peut être transféré de la position de déverrouillage (I.A) à la position de verrouillage (I.B) ou inversement par un changement de position, dans lequel un élément de détection (50) est prévu pour détecter la position de l'élément de blocage (40),
**caractérisé en ce**
**qu'**au moins une des positions de l'élément de blocage (40) peut être directement détectée par l'élément de détection (50), l'élément de commande (30) pouvant être amené dans une première position de commande (A) et dans une deuxième position de commande (B), et l'élément de commande (30) interagissant avec l'élément de blocage (40) de telle sorte que, dans la première position de commande (A), seule la position de déverrouillage (I.A) peuvent être pris, dans lequel, dans la deuxième position de commande (B), l'élément de blocage (40) est libéré pour le changement de position, l'élément de détection (50) étant un premier élément de détection (50a), et un deuxième élément de détection (50b) est prévu, qui est disposé par rapport à l'élément de commande (30) de telle sorte que la position de commande de l'élément de commande (30) puisse être détectée indépendamment de la position de l'élément de blocage (40).

2. Dispositif de verrouillage (10) selon la revendication 1,
**caractérisé en ce que**
le premier élément de détection (50a) et le deuxième élément de détection (50b) sont conçus comme un capteur électro-optique, en particulier comme une barrière lumineuse.

3. Dispositif de verrouillage (10) selon la revendication 1 ou 2,
**caractérisé en ce que**
l'élément de commande (30) présente un moyen de commande (31), en particulier sous la forme d'un guide (31), l'élément de blocage (40) comprenant un moyen de contre-commande (41.1), le moyen de commande (31) interagissant par complémentarité de forme avec le moyen de contre-commande (41.1) afin d'effectuer un changement de position.

4. Dispositif de verrouillage (10) selon l'une des revendications précédentes,
**caractérisé en ce que**
l'élément de détection (50), en particulier le premier élément de détection (50a), et/ou le deuxième élément de détection (50b), sont disposés sur une carte de circuit imprimé (22), à savoir dans une position fixe sur un côté de la carte de circuit imprimé (22) qui est tourné vers l'élément de blocage (40) et/ou l'élément de commande (30).

5. Dispositif de verrouillage (10) selon l'une des revendications précédentes,
**caractérisé en ce que**
l'élément de détection (50), en particulier le premier élément de détection (50a), et/ou le deuxième élément de détection (50b), présente un espace de détection (51), l'élément de commande (30) et/ou l'élément de blocage (40) comprenant chacun un moyen de détection (36, 44) complémentaire à celui-ci, la détection ayant lieu de préférence lorsque le moyen de détection (36, 44) est introduit dans l'espace de détection (51).

6. Dispositif de verrouillage (10) selon l'une des revendications précédentes,
**caractérisé en ce**
**qu'**un changement de position de l'élément de blocage (40) de la position de déverrouillage (I.A) à la position de verrouillage (I.B) est normalement effectué par un changement de position de l'élément de commande (30) d'une première position de commande (A) à une deuxième position de commande (B), un changement complet de position de l'élément de blocage (40) étant empêché dans une situation de blocage.

7. Dispositif de verrouillage (10) selon l'une des revendications précédentes,
**caractérisé en ce que**
l'élément de blocage (40) est conçu de telle manière qu'il est normalement introduit dans un réceptacle (3) du composant fonctionnellement essentiel (1) par le changement de position, et que le composant fonctionnellement essentiel (1) est ainsi verrouillé par complémentarité de forme, le composant fonctionnellement essentiel (1), en particulier les dents (2) du composant fonctionnellement essentiel (1), bloquant un changement de position dans une situation de blocage.

8. Dispositif de verrouillage (10) selon l'une des revendications précédentes,
**caractérisé en ce que**
en cas de changement de position incomplet dans une situation de blocage, l'élément de blocage (40) reste dans la position de déverrouillage (I.A) et/ou une position intermédiaire (II), le premier et/ou le deuxième élément de détection (50a, 50b) pouvant notamment distinguer la position de déverrouillage (I.A) et/ou la position intermédiaire (II) de la position de verrouillage (I.B).

9. Dispositif de verrouillage (10) selon l'une des revendications précédentes,
**caractérisé en ce que**
l'élément de commande (30) est monté de manière rotative dans le dispositif de verrouillage (10), dans lequel un changement d'une première position de commande (A) à une deuxième position de commande (B) peut être effectué par une rotation de l'élément de commande (30).

10. Dispositif de verrouillage (10) selon l'une des revendications précédentes,
**caractérisé en ce que**
le moyen de commande (31) entre la première position de commande (A) et la deuxième position de commande (B) présente un jeu croissant, en particulier un jeu de guidage, tel que le changement de position peut être effectué de manière croissante.

11. Dispositif de verrouillage (10) selon l'une des revendications précédentes,
**caractérisé en ce que**
l'élément de blocage (40) présente une partie de base (41) qui est en liaison active avec l'élément de commande (30), et présente en outre une partie active (42) qui, dans la position de verrouillage (I.B), est en liaison active directe avec le composant fonctionnellement essentiel (1) et coopère par adhérence et/ou par complémentarité de forme avec le composant fonctionnellement essentiel (1) afin de verrouiller le composant fonctionnellement essentiel (1).

12. Dispositif de verrouillage (10) selon l'une des revendications précédentes,
**caractérisé en ce que**
la partie active (42) est formée d'un matériau différent de la partie de base (41), de préférence avec une résistance plus élevée que la partie de base (41).

13. Procédé pour verrouiller et/ou déverrouiller un élément (1) fonctionnellement essentiel d'un véhicule au moyen d'un dispositif de verrouillage (10), avec un élément de blocage (40) mobile qui peut prendre au moins deux positions au moyen d'un élément de commande (30), à savoir
- une position de verrouillage (I.B) dans laquelle l'élément de blocage (40) destiné à bloquer le composant fonctionnellement essentiel (1) est en liaison fonctionnelle avec le composant fonctionnellement essentiel (1), et
- une position de déverrouillage (I.A) dans laquelle l'élément de blocage (40) pour le déverrouillage du composant fonctionnellement essentiel (1) n'est pas en liaison fonctionnelle avec le composant fonctionnellement essentiel (1), dans lequel
l'élément de blocage (40) est transféré de la position de déverrouillage (I.A) à la position de verrouillage (I.B) ou inversement par un changement de position, les étapes suivantes étant prévues :
a) Détecter au moins une des positions de l'élément de blocage (40) comme première position par un premier élément de détection (50a) de manière directe,
b) Détecter au moins une des positions de l'élément de blocage (40) comme deuxième position par un deuxième élément de détection (50a) de manière indirecte,
dans lequel la première et la deuxième position sont détectées indépendamment.

14. Procédé selon la revendication 13,
**caractérisé en ce**
**qu'**un dispositif de verrouillage (10) est fourni conformément à l'une des revendications précédentes.
